Europäisches Patentamt

**European Patent Office**

**Office européen des brevets**

(19)

(11) Numéro de publication: **0 122 175**
A1

(12) **DEMANDE DE BREVET EUROPEEN**

(21) Numéro de dépôt: **84400467.1**

(22) Date de dépôt: **08.03.84**

(51) Int. Cl.³: **A 01 K 63/00**

(30) Priorité: **11.03.83 CH 1336/83**

(71) Demandeur: **Piguet, Cyril, Route de la Foule, CH-1315 La Sarraz (CH)**

(43) Date de publication de la demande: **17.10.84 Bulletin 84/42**

(72) Inventeur: **Piguet, Cyril, Route de la Foule, CH-1315 La Sarraz (CH)**

(84) Etats contractants désignés: **AT BE DE FR GB IT LU NL SE**

(74) Mandataire: **Bonnetat, Christian et al, Cabinet PROPI Conseils 23 rue de Léningrad, F-75008 Paris (FR)**

(54) **Aquarium.**

(57) Aquarium définissant un bac rempli d'eau et dont au moins certains parois sont en matériau transparent, le bac étant associé à des moyens de filtration, de circulation et d'oxygénation de l'eau, caractérisé en ce qu'il comporte une ossature formée d'au moins une face plane horizontale (7) constituant l'embase de l'aquarium et associée à au moins une paroi verticale (6), les deux parois en forme de L étant réalisées en matériau moulé d'une seule pièce ou monocoque, la paroi verticale constituant la face arrière de l'aquarium étant associée à une cloison intérieure sensiblement parallèle à ladite face arrière, la cloison intérieure délimitant avec la paroi arrière (6) une chambre dorsale de filtration contenant les moyens de filtration, l'aquarium comportant en outre deux parois latérales (2, 4) et une paroi frontale (3) constituées de plaques de matériau transparent reposant sur l'embase et définissant avec ladite ossature un volume constituant le bac de rétention de l'eau, l'ensemble étant surmonté par un couvercle (8) effaçable.

AQUARIUM

La présente invention concerne les aquariums.

Les aquariums du type auquel appartient l'invention forment une cellule contenant un milieu liquide susceptible de permettre la vie et le développement d'organismes aquatiques, exposés à la vue de l'extérieur ; ils sont constitués à cet effet d'un bac rempli d'eau et dont au moins certaines parois sont en matériau transparent, le bac étant associé à des moyens de filtration, de circulation et d'oxygénation du milieu liquide.

Les aquariums de ce type doivent permettre à la flore et à la faune qu'ils contiennent, d'une part d'y vivre et d'autre part d'être vus de l'extérieur pour l'agrément des utilisateurs.

Or, la faune aquatique est souvent constituée d'individus fragiles et présente des exigences sévères vis à vis du milieu liquide contenu dans l'aquarium qui se traduit par l'obligation de prévoir des dispositifs de filtration, d'oxygénation et de brassage très perfectionnés et complexes. Ces contraintes sont importantes notamment en ce qui concerne la faune aquatique d'eau de mer et plus particulièrement les individus provenant de milieux marins coralliens.

De plus, le maintien en vie de cette faune suppose de solides connaissances du milieu marin d'une part et de ladite faune d'autre part.

Il est connu que dans le cycle naturel marin de régénérescence de l'eau, les bactéries jouent un grand rôle en détruisant et transformant les déchets organiques provenant du métabolisme des individus de la faune. Cette action des bactéries est d'autant plus nécessaire et importante que, par définition, le milieu liquide de l'aquarium est un milieu fermé.

Il faut donc prévoir une oxygénation régulière et importante de l'eau, ainsi que des surfaces support de ces bactéries où elles pourront se multiplier.

Les aquariums connus tentent de répondre à ces conditions à l'aide d'organes filtrants coûteux, complexes, nécessitant des opérations de nettoyage fréquentes et fastidieuses, et exigean un minimum de connaissances théoriques de la filtration.

En outre, la disposition des filtres des aquariums connue n'es pas esthétique.

De plus, les aquariums de type connu sont de tailles variées selon le volume de liquide contenu, lui-même fonction de la taille et du nombre des individus de la faune aquatique présen te dans le bac.

Si les aquariums de petite taille sont relativement faciles à réaliser, il n'en est plus de même des aquariums connus de grande taille qui soulèvent des problèmes spécifiques de rigidité et de construction.

Les aquariums connus de grande dimension font généralement app à une structure lourde, encombrante et difficile de mise en oeuvre et de transport. Ceci entraine des conséquences néfaste quant au coût et à l'effet esthétique résultant. Ces inconvénients font hésiter les utilisateurs potentiels et limitent ainsi leurs applications notamment pédagogique.

En conséquence, les aquariums connus sont lourds et encombrant et présentent de grandes difficultés d'utilisation eu égard à leur compléxité et aux connaissances nécessaires de l'utilisateur dans le domaine de la filtration.

Un but de l'invention est de permettre une filtration et une oxygénation adéquates de l'eau du bassin et d'éviter toute manipulation inutile de la part de l'utilisateur.

Un autre but de l'invention est de permettre une réalisation e un transport aisés ainsi qu'un montage facile et rapide des aquariums.

A cette fin, selon l'invention, l'aquarium définissant une cellule contenant un milieu liquide permettant la vie et le développement d'organismes aquatiques, exposés à la vue de l'extérieur, du type comportant un bac rempli d'eau et dont au moins certaines parois sont en matériau transparent, le bac étant associé à des moyens de filtration, de circulation et d'oxygénation de l'eau, est caractérisé en ce qu'il comporte une ossature formée d'au moins une face plane horizontale constituant l'embase de l'aquarium et associée à au moins une paroi verticale, les deux parois en forme de L étant réalisées en matériau moulé d'une seule pièce ou monocoque, la paroi verticale constituant la face arrière de l'aquarium étant associée à une cloison intérieure sensiblement parallèle à ladite face arrière, la cloison intérieure délimitant avec la paroi arrière une chambre dorsale de filtration contenant les moyens de filtration, l'aquarium comportant en outre deux parois latérales et une paroi frontale constituées de plaques de matériau transparent, reposant sur l'embase et définissant avec ladite ossature un volume constituant le bac de rétention de l'eau, l'ensemble étant surmonté par un couvercle effaçable.

L'invention sera bien comprise à la lumière des dessins annexés.

La figure 1 est un schéma en perspective montrant l'aquarium selon l'invention, le couvercle en position relevée.

La figure 2 est une vue éclatée en perspective montrant à une échelle réduite, la structure monocoque et la chambre dorsale.

La figure 3 est une vue en plan montrant de dessus l'aquarium selon l'invention, le couvercle étant ôté.

La figure 4 montre sur la moitié droite du dessin une coupe suivant la ligne B-B de la figure 1 et sur la moitié gauche une vue arrière de l'aquarium.

La figure 5 est une coupe transversale suivant la ligne A-A de la figure 2.

La figure 6 est une vue en coupe longitudinale suivant la moitié de la longueur de la ligne B-B de la figure 1, à une échelle agrandie.

L'aquarium 1 selon l'invention est du type comportant un bac rempli d'eau dont certaines parois 2, 3, 4, 5 sont constituées d'un matériau transparent afin de permettre le passage de la lumière et la vision de la faune aquatique vivant dans l'eau remplissant le bac.

La paroi supérieure 5, de préférence transparente, est avantageusement constituée de panneaux jointifs dont au moins quelques uns sont amovibles.

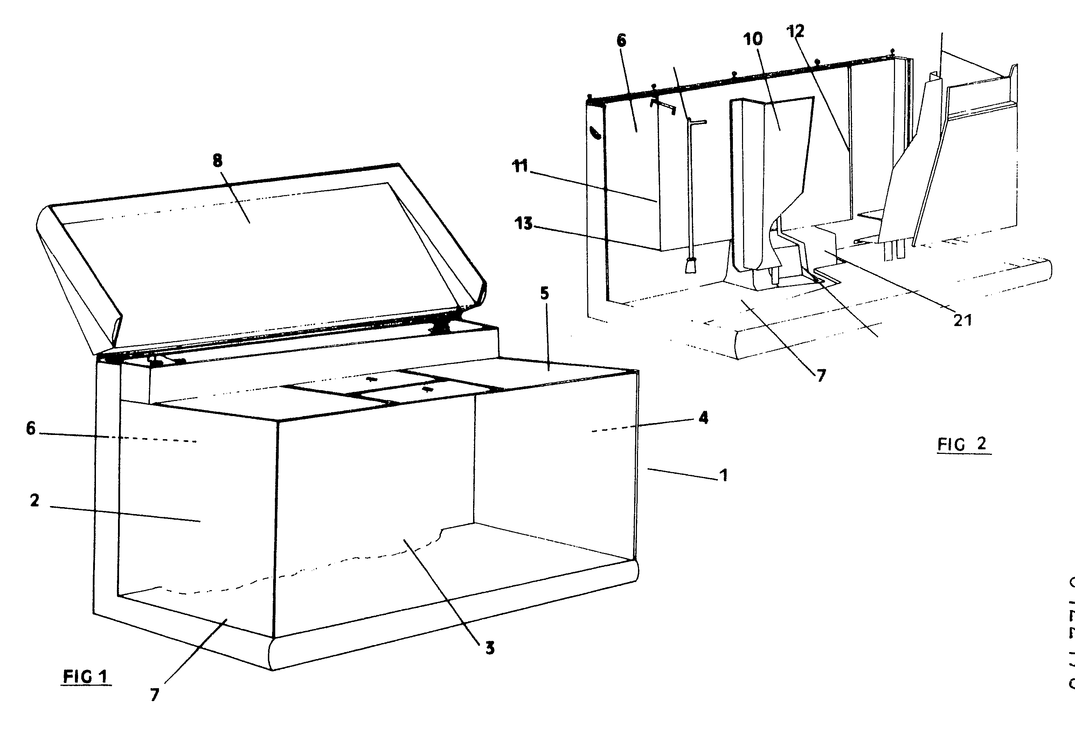

La paroi arrière 6 et le fond 7 formant l'embase (figures 1 et 2) sont en matériau rigide et constituent la structure porteuse de l'aquarium. De préférence, ce dernier est pourvu d'un couvercle 8 rabattable et articulé à cet effet par exemple sur le bord supérieur de la paroi arrière 6.

Afin de permettre la vie et le développement des individus de la faune aquatique, l'aquarium comporte des moyens de filtration, de circulation et d'oxygénation de l'eau du bac, avantageusement placés contre la paroi arrière 6 du côté intérieur du bac.

A cet effet, l'aquarium comporte une chambre dorsale de filtration 9 dans laquelle sont disposés les moyens de filtration. La chambre 9 est constituée par une cloison 10 solidarisée contre la face interne de la paroi arrière 6. La cloison 10 est fixée par exemple par introduction de ses deux bords verticaux dans des fentes 11, 12, 13 correspondantes venues de la face interne de la paroi arrière 6 ou rapportées sur cette dernière.

Les moyens de filtration sont formés d'une succession de médias filtrants étagés verticalement dans la chambre dorsale 9 ouverte à sa face supérieure.

Avantageusement, la cloison 10 délimitant avec la paroi arrière 6 la chambre dorsale 9, présente une largeur et une hauteur inférieure à celles de la paroi arrière 6 de manière à libérer deux espaces latéraux (de chaque côté de ladite chambre) et un espace inférieur (sous cette dernière).

Dans ces deux espaces latéraux, prennent place les moyens de prélèvement et de circulation d'eau et d'oxygénation de celle-ci.

Ces moyens sont constitués de chaque côté de la chambre dorsale 9 d'un conduit 14 vertical, associé à un siphon flotteur 15 captant l'eau à la surface et dirigeant l'eau vers l'extrêmité inférieure dudit conduit 14, relié par un coude à une cheminée verticale ou exhausteur 16. A la base de cette dernière est disposé un diffuseur 17 en matériau microporeux relié à un conduit 18 intérieur à la cheminée, lui-même branché sur une source 20 d'air sous pression.

La source 20 d'air sous pression est avantageusement disposée à la base de l'aquarium sous la chambre dorsale, le fond 7 de l'aquarium formant à cet endroit avec la paroi arrière 6, un renflement 21.

La cheminée d'amenée 16 traverse le niveau supérieur de l'eau du bassin et débouche dans la chambre dorsale 9 juste au-dessus des médias filtrants contenus dans cette chambre.

Ainsi, l'eau prise en surface par le siphon flotteur 15 descend le long du conduit 14 et est mélangée à l'air traversant le diffuseur 17 (et provenant de la source 20 via la conduite 18) à la base de la cheminée 16, le mouvement ascensionnel des bulles provoquant la montée de l'eau dans cette dernière.

La captation de l'eau en surface par siphon flotteur permet de drainer les matières colloïdales avant leur chute au fond du bassin.

L'eau chargée d'air, débouchant à l'extrêmité supérieure de la cheminée 16, coule dans une première rigole d'une double goulotte 22 où les bulles d'air chargées de matières organiques, avant d'exploser forment une écume débordant de ladite rigole et qui vient se déposer et s'oxyder contre les parois du filtre (c'est-à-dire la cloison 10 et la paroi arrière 6). Ainsi, on élimine mécaniquement dès l'origine, les pollutions les plus grossières avant l'entrée de l'eau dans les médias filtrants. L'écume chargée de matières est éliminée de la façon indiquée précédemment, tandis que l'écume vierge de pollutions grossières passe dans la seconde rigole de la double goulotte pourvue de fentes dans son fond au travers desquelles s'écoule l'eau qui tombe alors sur les médias filtrants.

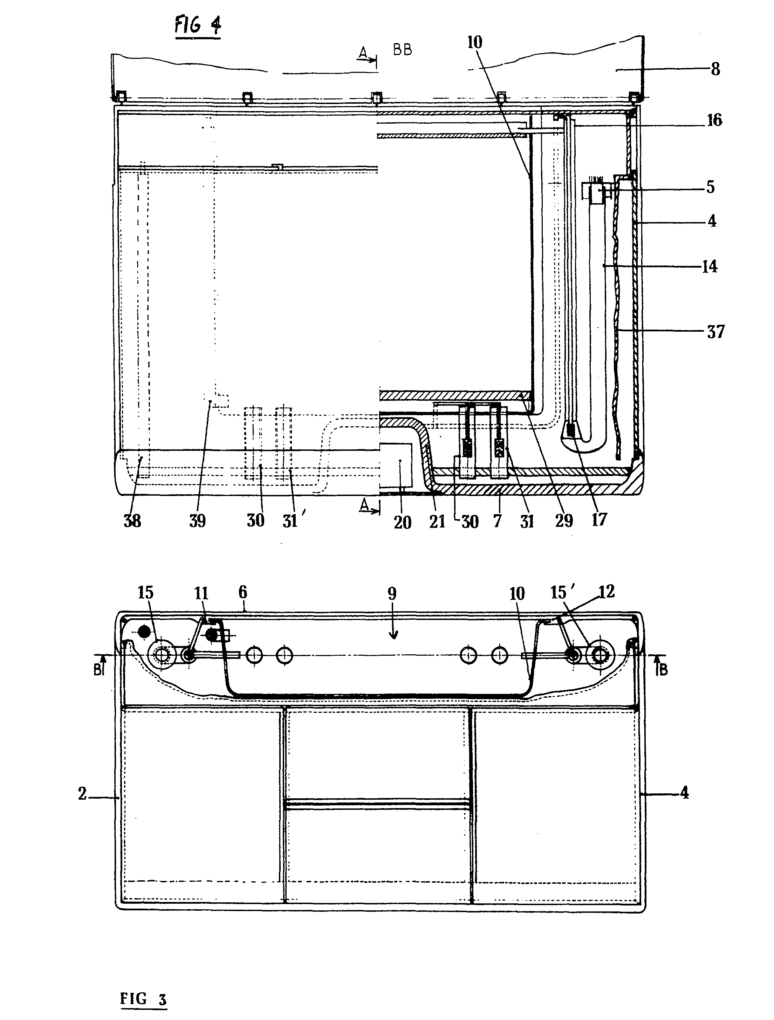

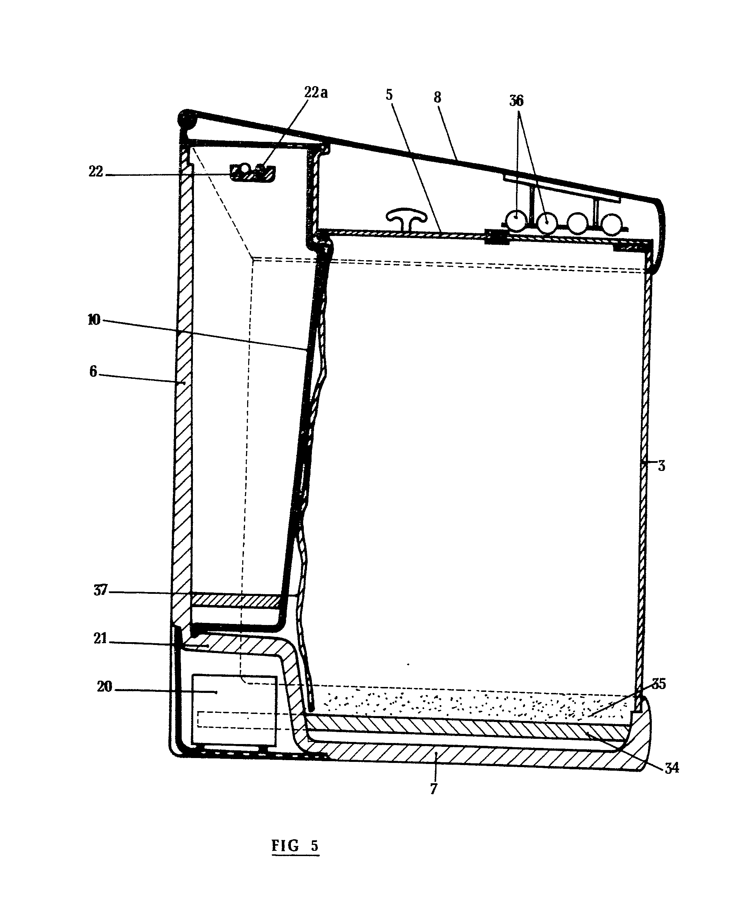

Comme on le voit sur les figures 4, 5 et 6, la chambre dorsale est surélevée par rapport au niveau d'eau du bassin, de façon que les premiers étages des médias filtrants soient situés en partie au-dessus dudit niveau.

Afin d'opérer une première désinfection de l'eau au-dessus de la seconde rigole de la double goulotte 22, est disposée parallèlement à celle-ci une lampe 22a émettant des rayons ultra-violets de courte longueur d'onde et susceptible d'être actionnée par une horloge.

Ainsi, avant même l'entrée de l'eau dans les médias filtrants, premières substances non dégradées sont mécaniquement éliminées l'eau a déjà subi une désinfection par irradiation. Ceci permet de soulager d'autant le travail ultérieur desdits médias filtrants.

Dans la chambre dorsale de filtration 9, est disposée une succession verticale de médias filtrants en différents étages au travers desquels circule l'eau par gravité.

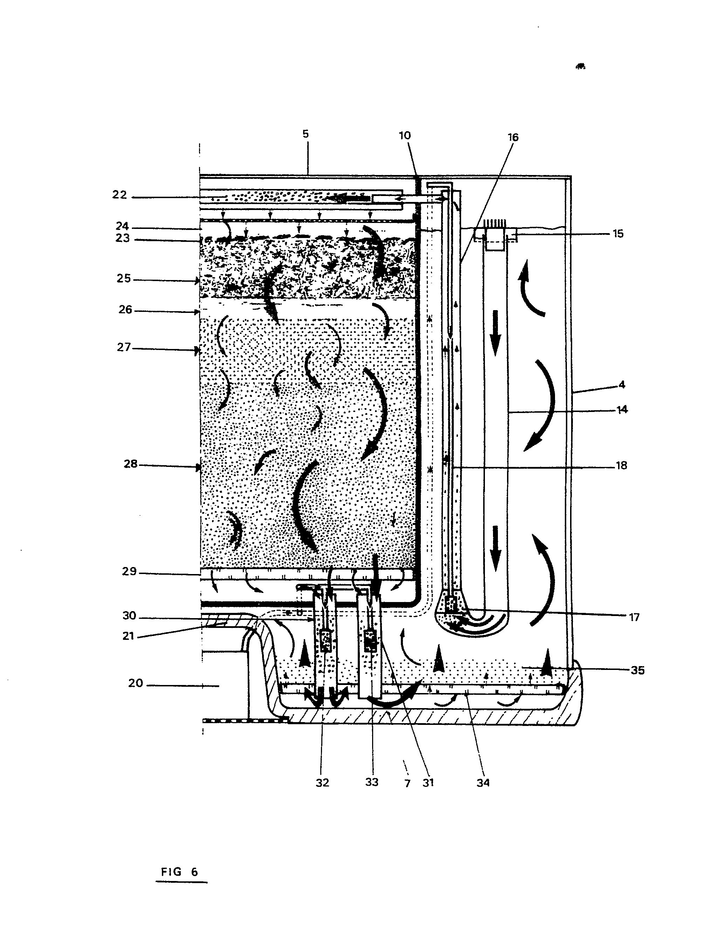

En se référant à la figure 6, les moyens de filtration comportent un premier filtre agissant de manière mécanique, situé au-dessus du niveau d'eau du bassin.

Le premier filtre dit mécanique, est constitué successivement d'une plaque perforée 23 en matière synthétique recouverte d'une couche de matériau poreux tel que de l'ouate 24 et destinée à répartir l'eau uniformément sur la surface du filtre, puis d'une couche de gravier 25 (calcaire dans le cas de filtration d'eau de mer) aidant la transformation des nitrites en nitrates et enveloppé dans un filet en matière synthétique tel qu'un polyamide (afin de permettre son enlèvement aisé) ; vient ensuite une couche de matériau diffuseur 26 en ouate d'un polyamide. La partie inférieure de cette couche se situe sensiblement au niveau de l'eau du bassin.

Le seul entretien du filtre consiste à enlever la seconde couche d'ouate 26 et le gravier 25 pour les laver à l'eau courante ; cette opération est à effectuer trimestriellement par exemple.

Le premier filtre mécanique est suivi d'un second filtre biologique constitué, d'une part d'une couche charbon actif 27 (enveloppée dans un filet de polyamide) destinée à absorber les substances organiques et à retenir l'ammoniaque et les produits azotés et d'autre part d'une couche de sable 28. Afin que ce filtre biologique remplisse son rôle de manière efficace, il est nécessaire que sa surface (dans le sens transversal) et son volume (par rapport à la masse d'eau totale du bassin) soient importants.

En effet, ceci permet une circulation très lente de l'eau par gravité, autorisant une dégradation totale des matières organiques par action des bactéries. Le sable 18 utilisé est formé dans le cas de filtration d'eau de mer de coquilles concassées et de sables coraliens creux constituant ainsi un substrat adéquat pour le développement et la fixation des bactéries.

L'emploi de ce type de ce sable présente l'avantage de maintenir le pH et d'éliminer les phosphates.
La masse de sable 28 du filtre biologique représente 20 % en poids, de préférence de la masse totale d'eau du bassin.

8

Le second filtre biologique 27, 28 repose sur un panneau 29 en matière synthétique microporeux et placé à quelques centimètres, de préférence 2 ou 3 centimètres, au-dessus du fond de la chambre dorsale 9.

L'eau, après avoir traversé les médias filtrants étagés, est évacuée hors de la chambre dorsale 9 grâce à des conduits tuyères 30, 31 traversant le fond de la cloison 10 et débouchant à quelques centimètres du fond 7 de l'aquarium.

A l'intérieur de chacun des conduits 30, 31, est disposé un diffuseur respectivement 32, 33 microporeux, alimenté en air pulsé par l'intermédiaire de tubes reliés à la source 20 d'air sous pression.
Ainsi, l'eau descendant par gravité au travers des conduits 30, 31, est à nouveau oxygénée directement.

De plus, l'air sortant des diffuseurs remonte dans les conduits tuyères 30, 31 puis, après avoir traversé le panneau 29, envahit la couche de filtration biologique de sable 28, favorisant ainsi l'oxygénation de cette dernière et donc le développement et l'action des bactéries aérobies.

Afin de parfaire le filtrage biologique, l'aquarium comporte une plaque en matériau microporeux, disposée parallèlement et à proximité du fond 7 et recouverte d'un lit de sable 35 du même type que celui constituant la couche de filtration biologique 28. Les conduits tuyères 30, 31 traversent ladite plaque 34 de fond de manière que l'eau, débouchant de ces dernières, traverse en un courant ascendant ladite plaque de fond 34 et le lit de sable 35 et se mêle à l'eau du bassin.

Avantageusement, le volume du lit de sable 35 constitue au moins 10 % en poids de la masse d'eau du bassin, et de préférence entre 20 et 25 % en poids.
La plaque 34 et le lit de sable 35, couvrant de préférence la totalité du fond du bassin constituent des moyens de filtrage biologique additionnels.

On comprend que l'eau filtrée qui débouche du lit de sable 35 et se mêle à l'eau de l'aquarium, a subi une filtration efficace est donc très pure.

La plaque 34 de fond et le panneau 29 supportant les médias filtrants de la chambre dorsale 9 sont traversés chacun par un tuyau transparent 38, 39 qui dépasse de quelques centimètres de la surface de l'eau et pourvu d'un flotteur à l'intérieur. Celui-ci permet un contrôle visuel immédiat du passage de l'eau et en outre un décolmatage des filtres biologiques par injection de liquide au moyen d'une pompe (cette dernière opération ne devant être effectuée que tous les deux ou trois ans). Les flotteurs, gradués de préférence, servent également d'indicateur d'évaporateur d'eau et sont reliés à une alarme.

L'aquarium comporte également des organes d'éclairage 36 fixés au couvercle 8. En outre, sont prévus, selon l'invention, des moyens de mise en mouvement de l'eau, tels que des pompes, et commandés de manière à créer des mouvements d'eau et des courants aléatoires évitant la stagnation des impuretés et permettant de renforcer l'analogie avec le milieu naturel.

L'aquarium est pourvu également d'une commande électrique de tous les organes électriques associés, non représentée pour la clarté des dessins.

La structure de l'exemple montré sur les figures est selon l'invention constituée par le fond 7 et la paroi arrière 6 réalisés tout deux par moulage en une seule pièce d'un matériau synthétique ou d'une association de plusieurs de ces matériaux.
Ceci autorise un transport aisé de la structure et ainsi permet le montage des différents constituants de l'aquarium sur place.

Il est possible également de prévoir trois parois en matériau rigide (au lieu de deux) moulées en une seule pièce.

Dans un but esthétique, la partie dorsale de l'aquarium, comprenant les conduits 14 et cheminées 16 de prises d'eau et la chambre dorsale 9, est cachée des regards à l'aide d'un panneau rigide ou semi-souple 37 habillé sur sa face tournée vers le bassin de motifs en relief imitant une structure rocheuse.

Bien entendu, la disposition décrite notamment en regard de la figure 6 est symétrique en ce sens que l'aquarium comporte deux dispositifs de prise d'eau latéraux (14, 15, 16, 17, 18) et quatre conduits tuyères de sortie (30, 31) et (30', 31') (voir figure 4). La double goulotte 22 est commune aux deux cheminées 16 et 16' latérales de relevage (une seule cheminée 16 a été représentée sur les dessins).

Il est aisé de comprendre que la fabrication de l'aquarium selon l'invention permet un gain de temps et réduit le coût de celui-ci, notamment par l'économie réalisée au cours du transport, puisqu'il peut être acheminé démonté sur le lieu de montage. La carcasse moulée allie solidité et légèreté.

Les parois latérales peuvent être obliques par rapport à la paroi arrière. De plus, la réalisation par moulage de l'ossature autorise de nombreuses variantes, parmi lesquelles peut être citée celle où l'ossature est composée en une seule pièce, d'une embase horizontale, d'une paroi arrière et d'un cadre supérieur délimitant la face supérieure constituée d'un couvercle rabattable.

0122175

REVENDICATIONS

1 - Aquarium définissant une cellule contenant un milieu liquide permettant la vie et le développement d'organismes aquatiques, exposés à la vue de l'extérieur, du type comportant un bac rempli d'eau et dont au moins certaines parois sont en matériau transparent, le bac étant associé à des moyens de filtration, de circulation et d'oxygénation de l'eau, caractérisé en ce qu'il comporte une ossature formée d'au moins une face plane horizontale constituant l'embase de l'aquarium et associée à au moins une paroi verticale, les deux parois en forme L étant réalisées en matériau moulé d'une seule pièce ou monocoque, la paroi verticale constituant la face arrière de l'aquarium étant associée à une cloison intérieure délimitant avec ladite paroi arrière une chambre dorsale de filtration contenant les moyens de filtration, l'aquarium comportant en outre deux parois latérales et une paroi frontale, constituées de plaques de matériau transparent, reposant sur l'embase et définissant avec ladite ossature un volume constituant le bac de rétention de l'eau, l'ensemble étant surmonté par un couvercle effaçable.

2 - Aquarium selon la revendication 1, caractérisé en ce qu'il comporte des moyens de mise en mouvement de l'eau, tels qu'une pompe aspirant et refoulant le liquide du bassin, associés à des organes de commandes aptes à programmer un fonctionnement discontinu et irrégulier, de manière à créer, au sein de la masse d'eau où vivent les individus de la faune, des courants aléatoires permettant d'éviter les stagnations d'impuretés et de renforcer l'analogie avec le milieu naturel.

3 - Procédé de filtration et d'oxygénation de l'eau contenue dans l'aquarium selon l'une des revendications 1 ou 2, caractérisé en ce que l'eau est prélevée à la surface du bac et est ensuite déversée, après oxygénation, au sommet d'une succession de médias filtrants étagés, disposés dans la chambre dorsale de filtration et dont une partie est disposée à une hauteur dépassant le niveau du milieu liquide contenu dans le bac, lesdits médias filtrants étant en communication avec l'eau du bac par la base de ce dernier, l'eau en cours de filtration suivant un courant descendant au sein desdits médias filtrants et étant ensuite réintroduite à la base du bac et mêlée à la masse liquide contenue dans ce dernier.

4 - Aquarium selon l'une des revendications 1 ou 2 et pour la mise en oeuvre du procédé selon la revendication 3, caractérisé en ce que le liquide prélevé au fil de l'eau à la surface du bac est dirigé par une conduite à la base de ce dernier où elle est introduite à la partie inférieure d'une cheminée de relevage ou exhausteur comportant des moyens d'injection d'un gaz contenant de l'oxygène tel que de l'air comprimé, le mouvement ascensionnel des bulles de gaz entrainant l'eau dans un mouvement ascensionnel au sein de la cheminée, l'eau déversée depuis la cheminée de relevage, dépassant de quelques centimètres du niveau de l'eau, étant répartie sur l'ensemble et au sommet des médias filtrants par une goulotte de dispersion susceptible d'être associée à un organe d'émission d'un rayonnement bactéricide, tel qu'une lampe ultraviolet, ladite goulotte permettant une première élimination physique des impuretés.

5 - Aquarium selon la revendication 4 ci-dessus, caractérisé en ce que les médias filtrants comportent au moins une première couche de filtration mécanique constituée de préférence d'un étage d'un matériau fibreux, tel que de l'ouate et d'un étage de matière minérale telle que du gravier, ladite première couche étant disposée à une hauteur supérieure au niveau du milieu liquide contenu dans le bac.

6 - Aquarium selon l'une des revendications 4 ou 5 ci-dessus, caractérisé en ce que les médias filtrants comportent, sous la couche de filtration mécanique, une couche de filtration biologique fonctionnant en lit bactérien et constituée notamment d'un
volume de sable représentant au moins 10 % en poids et de préférence 20 %, de la masse d'eau contenue dans le bac.

7 - Aquarium selon les revendications 5 et 6 ci-dessus,
caractérisé en ce que les médias filtrants comportent entre la
couche de filtration mécanique et la couche de sable, une couche
constituée d'une masse de charbon actif apte à provoquer l'élimination par rétention des composés ammoniacaux.

8 - Aquarium selon l'une des revendications 4 à 7 ci-dessus,
caractérisé en ce que les médias filtrants étagés reposent sur
un panneau support inférieur constitué d'un matériau microporeux
apte à être traversé par l'eau et à la base duquel sont disposés
des moyens d'oxygénation, constitués par exemple de diffuseurs
reliés à une source d'air sous pression et disposés dans des
conduits-tuyères traversant le fond de la chambre dorsale de
filtration et permettant de canaliser l'eau issue des médias
filtrants vers le fond de l'aquarium, l'air remontant par bulles
à travers les médias filtrants et oxygénant ainsi notamment
l'étage de sable de la couche biologique, et permettant alors le
développement de bactéries aérobies.

9 - Aquarium selon l'une des revendications 4 à 8,
caractérisé en ce que, parallèlement et à proximité du fond du
bac, sont disposés des moyens de filtration biologique additionnels, constitués d'une plaque en matériau poreux recouverte de
matériau pulvérulent inerte, tel que du sable, lesdits moyens
couvrant au moins une partie dudit fond et étant traversés par
des conduits tuyères reliés à la base des médias filtrants
étagés, l'eau filtrée issue de ces derniers débouchant alors
sous lesdits moyens de filtrages additionnels et les traversant
dans un mouvement ascensionnel en y subissant une filtration
supplémentaire avant de se mêler à la masse d'eau contenue dans
le bac.

10 - Aquarium selon les revendications 6 et 9 ci-dessus, caractérisé en ce que la masse des lits de filtration biologique ou lits bactériens constituée, d'une part par le lit bactérien situé dans la chambre dorsale de filtration, et d'autre part par le lit de sable situé à la base du lac, représente entre 30 et 45 % en poids de la masse d'eau contenue dans le bac.

0122175

FIG 2

FIG 1

FIG 4

FIG 3

FIG 5

0122175

FIG 6

# 0122175

Office europeen des brevets

**RAPPORT DE RECHERCHE EUROPEENNE**

Numero de la demande

EP 84 40 0467

## DOCUMENTS CONSIDERES COMME PERTINENTS

| Categorie | Citation du document avec indication. en cas de besoin. des parties pertinentes | Revendication concernée | CLASSEMENT DE LA DEMANDE (Int. Cl. 3) |
|---|---|---|---|
| A | FR-A-2 437 782 (PLASTINA) <br><br> * Revendications 1, 11, 16; page 4, lignes 6-23; page 5, lignes 14-21; page 6, lignes 10-22; figures 1, 2, 4, 5 * | 1,2,4, 8,9 | A 01 K 63/00 |
| A | DE-U-8 212 984 (E. TUBES) <br> * Revendications 1, 10; page 3, ligne 22 - page 5, ligne 22; figures 1, 4 * | 1 | |
| A | FR-A-1 576 439 (STRATIMER) <br> * Page 1, ligne 31 - page 2, ligne 32; figures 1, 2 * | 1-7 | |
| A | US-A-4 191 129 (A.B. RENNY) <br> * Colonne 1, lignes 21-50; figures 1, 4, 6, 7 * | 1,2 | |
| A | US-A-3 971 338 (P.C. ALEXSON) | | |
| A | DE-C- 539 208 (O. JOHANSEN) | | |

**DOMAINES TECHNIQUES RECHERCHES (Int. Cl. 3)**

A 01 K 63/00

Le présent rapport de recherche a été établi pour toutes les revendications

| Lieu de la recherche | Date d'achevement de la recherche | Examinateur |
|---|---|---|
| BERLIN | 29-05-1984 | BERGZOLL M C |

BAD ORIGINAL